# EUROPÄISCHE PATENTANMELDUNG

(11) **EP 4 640 460 A1**
(43) Veröffentlichungstag der Anmeldung: **29.10.2025**
(21) Anmeldenummer: 25171239.4
(22) Anmeldetag: 17.04.2025
(51) Int. Cl.: B60J 10/248, B60J 10/26, B60J 10/27, B60J 10/84, B60R 13/04

(54) **DICHTUNGSANORDNUNG, KRAFTFAHRZEUG-TÜRDICHTUNG UND KRAFTFAHRZEUG**

(30) Priorität: 26.04.2024 DE 102024111778
(71) Anmelder: CQLT SaarGummi Technologies S.à.r.l., 5544 Remich (LU)
(72) Erfinder: Thome, Martin, 66839 Schmelz-Limbach (DE)
(74) Vertreter: Patentanwälte Bernhardt / Wolff Partnerschaft mbB

(57) **Zusammenfassung**

Die Erfindung betrifft eine Dichtungsanordnung (4) für eine Kraftfahrzeugtür mit einer im Einstiegsbereich (2) eines Türrahmens (5) eines Kraftfahrzeugs befestigbaren Türdichtung (1). Um eine lange Haltbarkeit der Türdichtung (1) zu ermöglichen; umfasst die Dichtungsanordnung (4) einen Abstandshalter (3) zur Vermeidung einer Beschädigung der Türdichtung (1) beim Einsteigen.

## Beschreibung

Die Erfindung betrifft eine Dichtungsanordnung für eine Kraftfahrzeugtür nach dem Oberbegriff des Anspruchs 1 sowie eine Kraftfahrzeug-Türdichtung und ein Kraftfahrzeug.

Durch Benutzung sind Dichtungsanordnungen für eine Kraftfahrzeugtür bekannt, welche eine im Einstiegsbereich eines Türrahmens eines Kraftfahrzeugs befestigbare Türdichtung umfassen. Üblicherweise erstreckt sich die Türdichtung umlaufend um den Türrahmen, um eine zuverlässige Abdichtung des Spalts zwischen der Kraftfahrzeugtür und dem Türrahmen zu ermöglichen. Bei geöffneter Tür ist die Türdichtung jedoch freigelegt und nicht ausreichend gegen äußere Einflüsse geschützt, was zu einem vorzeitigen Verschleiß der Türdichtung und damit einer unzureichenden Abdichtung der Kraftfahrzeugtür führen kann.

Aufgabe der Erfindung ist es, eine Dichtungsanordnung für eine Kraftfahrzeugtür zu schaffen, welche eine lange Haltbarkeit aufweist.

Diese Aufgabe wird dadurch gelöst, dass die Dichtungsanordnung einen Abstandshalter zur Vermeidung einer Beschädigung der Türdichtung beim Einsteigen umfasst. Durch den Abstandshalter kann zuverlässig verhindert werden, dass durch wiederholtes Abstreifen oder Reiben an einer Schuhsohle die Türdichtung im Einstiegsbereich beschädigt wird und vorzeitig verschleißt.

In einer ersten Ausführungsform kann der Abstandshalter durch ein separates Element, insbesondere durch ein Innenverkleidungsteil eines Kraftfahrzeugs gebildet werden, welches im Einstiegsbereich vorzugsweise oberhalb der Türdichtung angeordnet ist bzw. die Türdichtung zumindest teilweise überdeckt. Hierdurch wird gewährleistet, dass beim Einsteigen in das Kraftfahrzeug die Schuhsohle immer auf dem Abstandshalter in Form des Innenverkleidungsteils aufliegt und die Türdichtung vorzugsweise nicht berührt. Insbesondere kann eine Lippe des Innenverkleidungsteils nach außen zumindest über einen Abschnitt der Türdichtung vorstehen.

Zusätzlich oder alternativ kann der Abstandshalter durch mindestens einen nach oben vorstehenden Vorsprung der Türdichtung, insbesondere durch mindestens eine in Längsrichtung der Türdichtung verlaufende Rippe, ausgebildet sein. Hierdurch wird erreicht, dass beim Einsteigen die Schuhsohle nur mit dem Abstandshalter in Form des Vorsprungs in Kontakt kommt und die Schuhsohle die übrige Türdichtung, insbesondere zur Abdichtung vorgesehene Funktionsflächen der Türdichtung, nicht berührt. Vorteilhaft können mehrere Vorsprünge vorgesehen sein, insbesondere mehrere parallel zueinander angeordnete Rippen, welche nach oben von der Türdichtung vorstehen, wodurch die Funktionsflächen der Türdichtung großflächig geschützt sind. Der mindestens eine vorstehende Vorsprung verschleißt zwar bei einem Kontakt mit einer Schuhsohle ebenfalls, bis zum vollständigen Abrieb des Vorsprungs ist jedoch die übrige Türdichtung geschützt und erfüllt die Dichtfunktion zwischen der Kraftfahrzeugtür und dem Türrahmen.

Besonders bevorzugt ist der Abstandshalter nur in einem Einstiegsbereich, insbesondere in einem im wesentlichen horizontalen Abschnitt der Türdichtung, vorgesehen. Dieser Einstiegsbereich kann durch eine Trittstufe des Türrahmens gebildet sein. Der Auftritt der Trittstufe kann dabei auf gleicher Höhe wie die Türdichtung oder oberhalb der Türdichtung angeordnet sein, so dass die Türdichtung nicht über den Auftritt der Trittstufe nach oben vorsteht. Der Auftritt der Trittstufe kann weiter vorteilhaft unterhalb eines Bodens des Innenraums des Kraftfahrzeugs angeordnet sein, wodurch die Trittstufe ein einfaches Einsteigen insbesondere in höhere Fahrzeuge ermöglicht.

Die Türdichtung kann im Querschnitt einen U-förmigen Befestigungsabschnitt sowie mindestens eine Hohlkammer umfassen. Die Hohlkammer kann vorzugsweise an einem freien Ende der Türdichtung vorgesehen sein, welches zur Anlage an einer Kraftfahrzeugtür ausgebildet ist und eine Funktionsfläche bildet. An der Außenseite der Wand der Hohlkammer kann eine Schutzschicht gegen Abrieb beispielsweise in Form einer Lackbeschichtung vorgesehen sein. Das Material der Wand der Hohlkammer wird vorzugsweise durch einen weichen Gummi gebildet, insbesondere Moosgummi. In einer vorteilhaften Ausführungsform sind mindestens zwei Hohlkammern vorgesehen, wobei der Abstandshalter oberhalb der Hohlkammer angeordnet sein kann, welche näher an dem U-förmigen Befestigungsabschnitt angeordnet ist. Oberhalb der Hohlkammer, welche weiter von dem U-förmigen Befestigungsabschnitt angeordnet ist, ist vorzugsweise kein Abschnitt des Abstandshalters vorgesehen, so dass dieser Teil der Türdichtung für eine optimale Abdichtung als Funktionsfläche ungehindert zur Anlage an der Kraftfahrzeugtür kommen kann und bevorzugt die zuvor beschriebene Schutzschicht aufweist. Die Außenwand der Hohlkammer, welche näher an dem U-förmigen Befestigungsabschnitt angeordnet ist, kann vorzugsweise aus einem festeren Material, insbesondere einem Gummi-Material ohne (Luft-) Einschlüsse (Solid-Gummi) gebildet sein. Anstelle des U-förmigen Befestigungsabschnitts kann auch eine L-förmiger oder I-förmiger Befestigungsabschnitt vorgesehen sein, welche insbesondere zur Verklebung mit einem Karosseriefalz ausgebildet sind.

Die Türdichtung kann vorteilhaft durch ein Dichtungsprofil gebildet sein, insbesondere ein extrudiertes Dichtungsprofil, besonders bevorzugt ein variabel extrudiertes Dichtungsprofil. Dies ermöglicht besonders effizient eine Herstellung in einem Arbeitsschritt und aus einem Stück.

Des Weiteren wird auch eine Kraftfahrzeug-Türdichtung beansprucht, welche ein Dichtungsprofil umfasst, wobei in einem in Längsrichtung begrenzten Abschnitt des Dichtungsprofils mindestens einer der beschriebenen Abstandshalter vorgesehen ist. Der Abstandshalter kann insbesondere durch mindestens einen seitlich vorstehenden Vorsprung, insbesondere mindestens eine in Längsrichtung des Dichtungsprofils verlaufende Rippe, gebildet sein.

Zudem wird auch ein Kraftfahrzeug beansprucht, welches mindestens eine an einem Türrahmen angeordnete Kraftfahrzeugtür sowie eine an dem Türrahmen befestigte Türdichtung umfasst, wobei die Türdichtung wie zuvor beschrieben ausgebildet ist.

Weitere Besonderheiten und Vorzüge der Erfindung ergeben sich aus der folgenden Beschreibung bevorzugter Ausführungsbeispiele anhand der Zeichnungen. Es zeigen:
- Fig. 1: eine perspektivische Detailansicht einer Türdichtung gemäß einer ersten Ausführungsform;
- Fig. 2: eine perspektivische Darstellung einer Dichtungsanordnung mit der Türdichtung von Figur 1;
- Fig. 3: einen Querschnitt durch die Dichtungsanordnung von Figur 2 in einem Einstiegsbereich;
- Fig. 4: eine perspektivische Detailansicht einer Türdichtung gemäß einer zweiten Ausführungsform;
- Fig. 5: eine perspektivische Darstellung einer Dichtungsanordnung mit der Türdichtung von Figur 4 und
- Fig. 6: einen Querschnitt durch eine alternative Dichtungsanordnung in einem Einstiegsbereich.

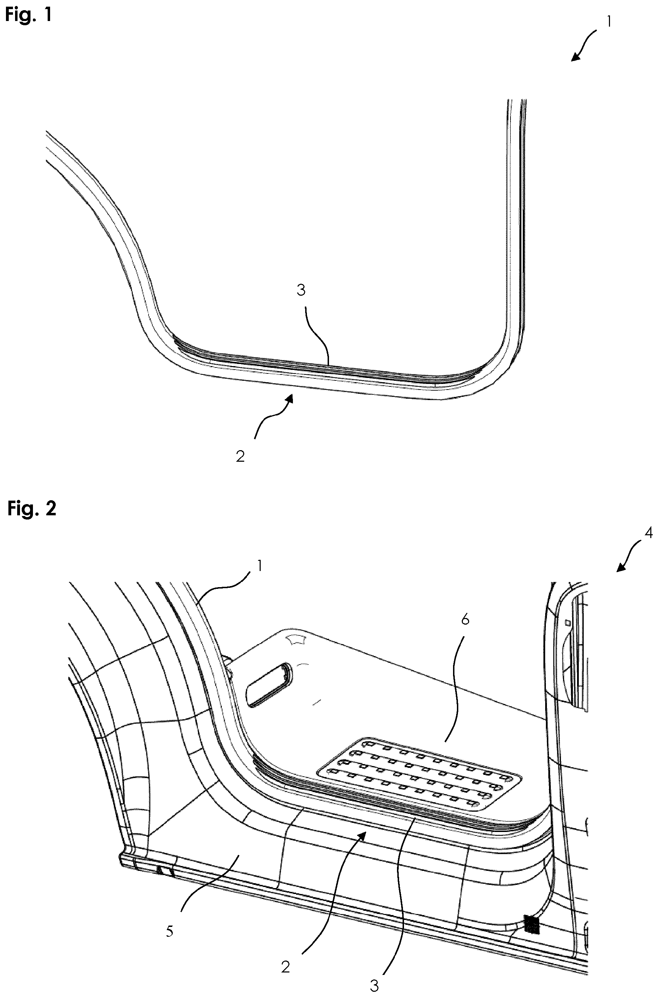

In Figur 1 ist eine perspektivische Detailansicht einer Türdichtung 1 gemäß einer ersten Ausführungsform gezeigt. Die Türdichtung 1 ist als Dichtungsprofil ausgebildet, welches insbesondere durch variable Extrusion hergestellt werden kann. In einem Einstiegsbereich 2, bei welchem es sich vorzugsweise um einen horizontalen Abschnitt der Türdichtung 1 handelt, ist ein Abstandshalter 3 in Form von mehreren parallel zueinander und in Längsrichtung der Türdichtung 1 verlaufenden und nach oben vorstehenden Rippen vorgesehen. Der Abstandshalter 3 erstreckt sich wie dargestellt nur über den horizontalen Abschnitt der Türdichtung 1 und die seitlichen aufsteigenden Abschnitte der Türdichtung 1 sind ohne einen derartigen Abstandshalter ausgebildet.

In Figur 2 ist eine perspektivische Darstellung einer Dichtungsanordnung 4 für eine nicht dargestellte Kraftfahrzeugtür gezeigt, welche die Türdichtung 1 von Figur 1 umfasst. Wie dort zu entnehmen ist, ist die Türdichtung 1 derart an einem Türrahmen 5 einer Kraftfahrzeugkarosserie befestigt, dass der Einstiegsbereich 2 zu einer Trittstufe 6 des Türrahmens 5 korrespondiert. Die Trittstufe 6 erleichtert den Einstieg insbesondere in höhere Kraftfahrzeuge. Die Türdichtung 1 umspannt vorzugsweise den gesamten Türrahmen 5 und ist an den Enden miteinander verbunden, um einen geschlossenen Ring zu bilden.

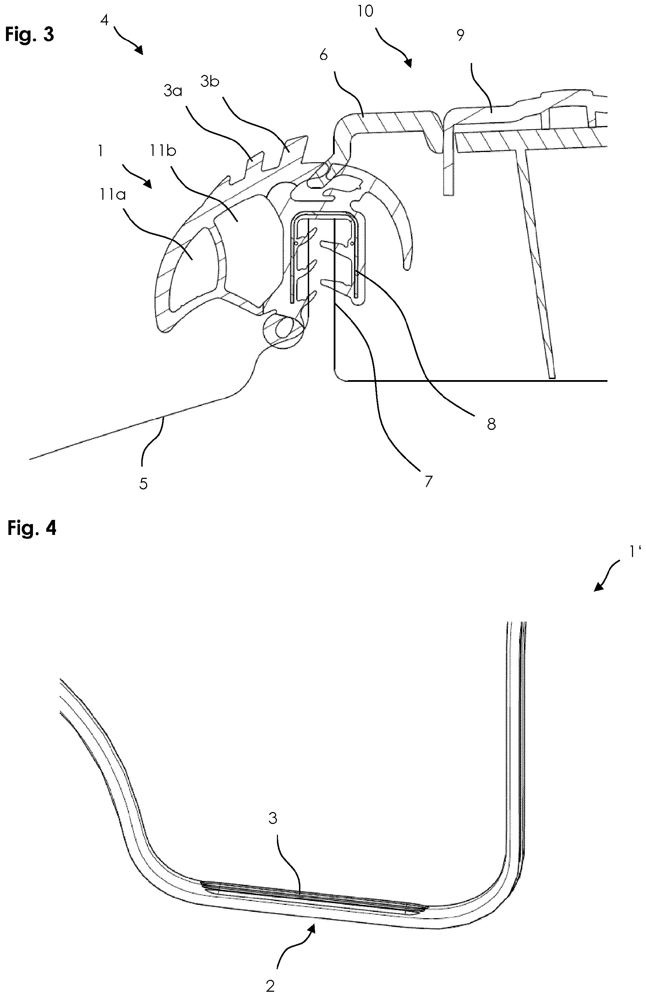

In Figur 3 ist ein Querschnitt durch die Dichtungsanordnung 4 von Figur 2 in dem Einstiegsbereich 2 gezeigt. Wie dort zu nehmen ist, wird der Türrahmen 5 durch ein gebogenes Karosserieblech gebildet, welches einen nach oben gerichteten Karosseriefalz 7 aufweist. Auf den Karosseriefalz 7 ist die Türdichtung 1 mit einem im Querschnitt U-förmigem Befestigungsabschnitt 8 aufgesteckt und gehalten. Die Trittstufe 6 wird durch ein Innenverkleidungsteil gebildet, welches zusammen mit einer Abstreifmatte 9 an der Oberseite einen Auftritt 10 bildet. Der Auftritt 10 ist oberhalb der Türdichtung 1 und unterhalb eines hier nicht gezeigten Bodens des Innenraums des Kraftfahrzeugs angeordnet. Hierdurch erleichtert die Trittstufe 6 zum einen den Einstieg in das Kraftfahrzeug und zum anderen wird durch den oberhalb der Türdichtung 1 angeordneten Auftritt 10 die Wahrscheinlicht eines Kontakts einer Schuhsohle mit der Türdichtung 1 verringert.

Um auch im Fall eines Kontakts einer Schuhsohle mit der Türdichtung 1 eine Beschädigung zu verhindern, umfasst die Türdichtung 1 einen Abstandshalter in Form von Rippen 3a, 3b, welche sich parallel zueinander und in Längsrichtung der Türdichtung 1 erstrecken und nach oben von der übrigen Türdichtung 1 vorstehen. Durch die nach oben vorstehenden Rippen 3a, 3b ist gewährleistet, dass beim Einstieg eine Schuhsohle immer nur in Kontakt mit den Rippen 3a, 3b kommt, wodurch eine Beschädigung zuverlässig verhindert wird und insbesondere die Funktionsfläche der nachfolgend beschrieben Hohlkammern geschützt bleibt.

In dem gezeigten Ausführungsbeispiel umfasst die Türdichtung 1 im Querschnitt zwei Hohlkammern 11a, 11b, von welchen eine erste Hohlkammer 11a weiter entfernt von dem Befestigungsabschnitt 8 als eine zweite Hohlkammer 11b ist. Der Abstandshalter in Form der Rippen 3a, 3b ist dabei vorzugsweise nur an einer Außenwand der Hohlkammer 11b vorgesehen und nicht an einer Außenwand der Hohlkammer 11a. Die Hohlkammer 11a ist an einem Ende der Türdichtung 1 vorgesehen, welches in Richtung einer hier nicht gezeigten Fahrzeugtür vorsteht und in der geschlossenen Position der Kraftfahrzeugtür mit einer Funktionsfläche zur dichtenden Anlage an der Kraftfahrzeugtür kommt. Durch die Anordnung der Rippen 3a, 3b nur im Bereich der Hohlkammer 11b bzw. nahe des Befestigungsabschnitts 8 wird eine zuverlässige Abdichtung einer Kraftfahrzeugtür durch die Funktionsfläche der Hohlkammer 11a gewährleistet.

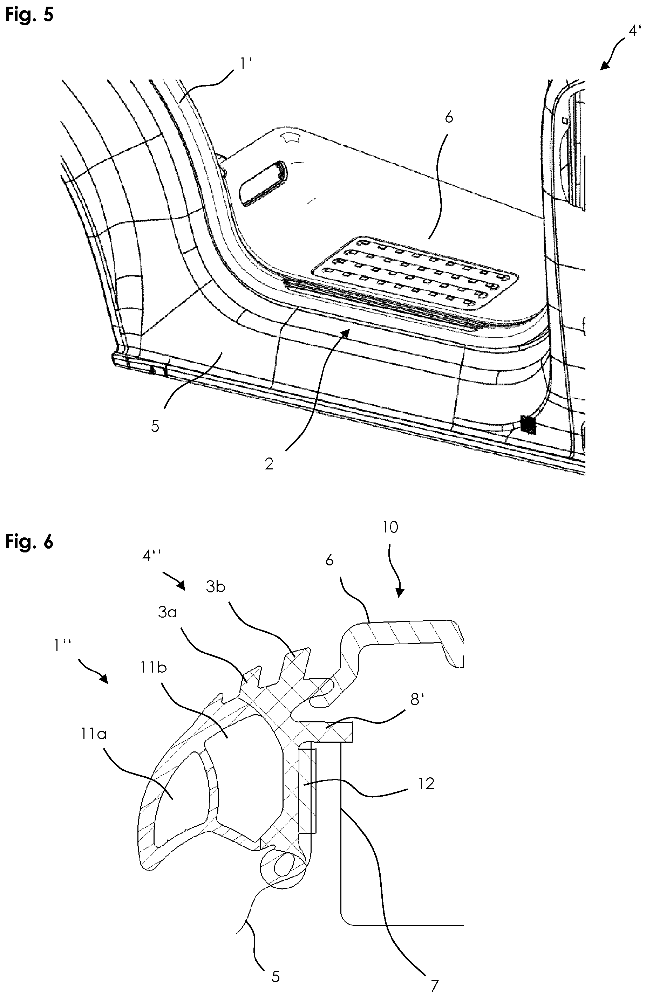

In einer in Figur 6 näher beschriebenen Ausführungsform kann die Türdichtung aus mehreren unterschiedlichen Materialien und/oder einem Material mit unterschiedlichen Eigenschaften, beispielsweise aufgrund Lufteinschlüsse, gebildet sein. Vorzugsweise ist dabei der von dem Befestigungsabschnitt 8 weiter entfernte Teil der Türdichtung 1, insbesondere zumindest ein Teil der Außenwand der Hohlkammer 11a, aus einem weicheren Material wie Moosgummi gebildet und ein näher an dem Befestigungsabschnitt 8 angeordneter Teil der Türdichtung 1, insbesondere die Rippen 3a, 3b, aus einem demgegenüber festeren Material gebildet. Hierdurch wird sowohl eine gute Abdichtung als auch eine lange Haltbarkeit der Türdichtung 1 gewährleistet. In einer weiteren nicht gezeigten Ausführungsform kann ein Abschnitt des Innenverkleidungsteils, insbesondere eine vorstehende Lippe vorzugsweise aus Kunststoff, über die Türdichtung 1, 1 ' und insbesondere nur über die Außenwand der Hohlkammer 11b ragen, um diese zu schützen.

In Figur 4 ist eine perspektivische Detailansicht einer Türdichtung 1' gemäß einer zweiten Ausführungsform gezeigt. Im Vergleich zu der Ausführungsform von Figur 1 erstreckt sich hierbei der Abstandshalter 3 in Längsrichtung der Türdichtung 1 ' über einen kürzeren Abschnitt des Einstiegsbereich 2 der Türdichtung 1' und nicht über den gesamten horizontalen Abschnitt der Türdichtung 1 ' im Einstiegsbereich 2.

In Figur 5 ist eine perspektivische Darstellung einer Dichtungsanordnung 4' gezeigt, welche die Türdichtung 1' von Figur 4 umfasst. Wie dort zu entnehmen ist, erstreckt sich der Abstandshalter 3 der Türdichtung 1' nicht über die gesamte Breite der Trittstufe 6. Hierdurch kann besonders einfach Wasser aus den Zwischenräumen des Abstandshalters seitlich abfließen. Zudem kann auch Wasser von der Trittstufe 6 an dem Abstandshalter 3 vorbeifließen und so von dem Innenraum des Kraftfahrzeugs abgeführt werden.

In Figur 6 ist ein Querschnitt durch eine alternative Dichtungsanordnung 4" in einem Einstiegsbereich gezeigt. Die im Vergleich mit der in Figur 3 gezeigten Ausführungsform identischen Merkmale sind mit den gleichen Bezugszeichen versehen. Die in Figur 6 gezeigte Dichtungsanordnung 4" unterscheidet sich insbesondere dadurch, dass die Türdichtung 1'' aus mehreren Materialien mit unterschiedlicher Härte gebildet ist. Wie dort zu entnehmen ist, wird das Material der Wand der Hohlkammer 11a vorzugsweise durch einen weichen Gummi gebildet, insbesondere einen Moosgummi, wohingegen die Außenwand der Hohlkammer 11b zumindest abschnittsweise aus einem festeren Material, insbesondere einem Gummi-Material ohne (Luft-) Einschlüsse (Solid-Gummi) gebildet ist. Die Trennung zwischen den zwei Materialien verläuft dabei vorteilhaft derart, dass die Rippen 3a, 3b an der Außenwand der Hohlkammer 11b auch aus dem festeren Material gebildet sind. Zudem unterscheidet sich die Ausführungsform von Figur 6 dahingehend, dass die Türdichtung 1'' anstelle eines U-förmigen Befestigungsabschnitts einen L-förmigen Befestigungsabschnitt 8' aufweist, welcher über einen Klebestreifen 12, insbesondere ein doppelseitiges Klebeband oder eine Klebstoffraupe, an einem der Schenkel mit dem Karosseriefalz 7 verbunden ist. Die Ausgestaltung des Befestigungsabschnitts 8, 8' ist nicht auf die jeweilige Ausführungsform der Figuren 3 und 6 beschränkt und kann ohne Weiteres auch vertauscht werden.

### Bezugszeichenliste:

- 1, 1', 1": Türdichtung
- 2: Einstiegsbereich
- 3, 3a, 3b: Abstandshalter
- 4, 4', 4'': Dichtungsanordnung
- 5: Türrahmen
- 6: Trittstufe
- 7: Karosseriefalz
- 8, 8': Befestigungsabschnitt
- 9: Abstreifmatte
- 10: Auftritt
- 11a, 11b: Hohlkammer
- 12: Klebestreifen

## Patentansprüche

1. Dichtungsanordnung (4; 4'; 4") für eine Kraftfahrzeugtür umfassend eine im Einstiegsbereich (2) eines Türrahmens (5) eines Kraftfahrzeugs befestigbare Türdichtung (1; 1 '; 1"),
**gekennzeichnet durch**
einen Abstandshalter (3; 3a; 3b) zur Vermeidung einer Beschädigung der Türdichtung (1; 1 '; 1'') beim Einsteigen.

2. Dichtungsanordnung (4; 4'; 4'') nach Anspruch 1,
**dadurch gekennzeichnet,**
**dass** der Abstandshalter durch ein separates Element, insbesondere durch ein Innenverkleidungsteil (6) gebildet wird, welches im Einstiegsbereich (2) oberhalb der Türdichtung (1; 1 '; 1 '') angeordnet ist bzw. die Türdichtung (1; 1 '; 1 ") zumindest teilweise überdeckt.

3. Dichtungsanordnung (4; 4'; 4") nach einem der vorhergehenden Ansprüche, **dadurch gekennzeichnet,**
**dass** der Abstandshalter (3; 3a; 3b) durch mindestens einen nach oben vorstehenden Vorsprung der Türdichtung (1; 1'; 1"), insbesondere mindestens eine in Längsrichtung der Türdichtung (1; 1 '; 1") verlaufende Rippe (3a; 3b), gebildet wird.

4. Dichtungsanordnung (4; 4'; 4") nach einem der vorhergehenden Ansprüche, **dadurch gekennzeichnet,**
**dass** der Abstandshalter (3; 3a; 3b) nur in dem Einstiegsbereich (2), insbesondere in einem im Wesentlichen horizontalen Abschnitt der Türdichtung (1; 1'; 1"), vorgesehen ist.

5. Dichtungsanordnung (4; 4'; 4") nach einem der vorhergehenden Ansprüche, **dadurch gekennzeichnet,**
**dass** der Einstiegsbereich (2) durch eine Trittstufe (6) des Türrahmens (5) gebildet wird.

6. Dichtungsanordnung (4; 4'; 4'') nach Anspruch 5,
**dadurch gekennzeichnet,**
**dass** der Auftritt (10) der Trittstufe (6) auf gleicher Höhe wie die Türdichtung (1; 1 '; 1'') oder oberhalb der Türdichtung (1; 1 '; 1'') angeordnet ist.

7. Dichtungsanordnung (4; 4'; 4") nach Anspruch 5 oder 6,
**dadurch gekennzeichnet,**
**dass** der Auftritt (10) der Trittstufe (6) unterhalb eines Bodens des Innenraums des Kraftfahrzeugs angeordnet ist.

8. Dichtungsanordnung (4; 4'; 4") nach einem der vorhergehenden Ansprüche, **dadurch gekennzeichnet,**
**dass** die Türdichtung (1; 1 '; 1'') im Querschnitt einen U-förmigen oder L-förmigen Befestigungsabschnitt (8; 8') sowie mehrere Hohlkammern (11a; 11b) umfasst, wobei der Abstandshalter (3; 3a; 3b) oberhalb der Hohlkammer (11b) angeordnet ist, welche näher an dem U-förmigen oder L-förmigen Befestigungsabschnitt (8; 8') angeordnet ist.

9. Dichtungsanordnung (4; 4'; 4") nach einem der vorhergehenden Ansprüche, **dadurch gekennzeichnet,**
**dass** die Türdichtung (1; 1 '; 1'') durch ein Dichtungsprofil, insbesondere ein variable extrudiertes Dichtungsprofil, gebildet ist.

10. Kraftfahrzeug-Türdichtung (1; 1 '; 1'') umfassend ein Dichtungsprofil,
**dadurch gekennzeichnet,**
**dass** in einem in Längsrichtung begrenzten Abschnitt des Dichtungsprofils mindestens ein Abstandshalter (3; 3a; 3b) vorgesehen ist.

11. Kraftfahrzeug-Türdichtung (1; 1 '; 1'') nach Anspruch 10,
**dadurch gekennzeichnet,**
**dass** der Abstandshalter (3; 3a; 3b) durch mindestens einen seitlich vorstehenden Vorsprung, insbesondere mindestens eine in Längsrichtung des Dichtungsprofils verlaufende Rippe (3a; 3b), gebildet wird.

12. Kraftfahrzeug umfassend mindestens eine an einem Türrahmen (5) angeordnete Kraftfahrzeugtür sowie eine an dem Türrahmen (5) befestigte Türdichtung (1; 1 '; 1"),
**dadurch gekennzeichnet,**
**dass** die Türdichtung (1; 1'; 1 '') nach Anspruch 10 oder 11 ausgebildet ist.
